Europäisches Patentamt

(19) European Patent Office

Office européen des brevets

(11) Numéro de publication: **0 075 248**
**B1**

# (12) FASCICULE DE BREVET EUROPEEN

(45) Date de publication du fascicule du brevet:
24.07.85

(51) Int. Cl.⁴: **H 04 Q 11/04, H 04 Q 3/54**

(21) Numéro de dépôt: 82108460.5

(22) Date de dépôt: 14.09.82

(54) **Dispositif de distribution de signaux pour autocommutateur temporel.**

(30) Priorité: 18.09.81 FR 8117643

(43) Date de publication de la demande:
30.03.83 Bulletin 83/13

(45) Mention de la délivrance du brevet:
24.07.85 Bulletin 85/30

(84) Etats contractants désignés:
BE CH DE FR GB IT LI NL SE

(56) Documents cités:
EP - A - 0 016 426
EP - A - 0 062 296
EP - A - 0 075 247

IEE FOURTH INTERNATIONAL CONFERENCE ON
SOFTWARE ENGINEERING FOR
TELECOMMUNICATION SWITCHING SYSTEMS, juillet
1981, pages 124-129, Warwynck (GB); M.
MAISONNEUVE et al.: "E10S operating system for a
distributed architecture"
INTERNATIONAL CONFERENCE ON
COMMUNICATIONS, 8-12 juin 1980, pages 46.3.1-46.3.7,
Seattle (USA); R. CHEA et al.: "Circuit terminations and
terminal control"
ERICSSON REVIEW, vol. 55, no. 4, 1978, pages 140-149,
Stockholm (SW); B. ERICSON et al.: "Digital group
selector in the AXE 10 system"
CONFERENCE RECORD 1978 INTERNATIONAL
CONFERENCE ON COMMUNICATIONS, vol. 2, IEEE
Cat. No.78CH1350-8 CSCB, 4-7 juin 1978, pages
32.1.1-32.1.5, Toronto (CA); B.J. ECKHART et al.:
"DMS-200 system evolution"

(73) Titulaire: **COMPAGNIE INDUSTRIELLE DES
TELECOMMUNICATIONS CIT-ALCATEL S.A. dite:,
12, rue de la Baume, F-75008 Paris (FR)**

(72) Inventeur: **Duplessis, Philippe, 14, avenue Adrienne,
F-92700 Colombes (FR)**
Inventeur: **Brusa, Michel, 2, rue du Petit Bontemps,
F-78370 Plaisir (FR)**

(74) Mandataire: **Weinmiller, Jürgen et al, Zeppelinstrasse 63,
D-8000 München 80 (DE)**

(56) Documents cités: (suite)
INTERNATIONAL SWITCHING SYMPOSIUM, 11 mai
1979, pages 221-228, Paris (FR); H. SUCKFULL:
"Architecture d'une nouvelle gamme
d'autocommutateurs temporels"
INTERNATIONAL SWITCHING SYMPOSIUM, 25-29
octobre 1976, pages 142.3.1-142.3.6, Kyoto (JP); A.S.
PHILIP: "A multipurpose digital switching subsystem"
THE 10th INTERNATIONAL SYMPOSIUM ON FAULT.
TOLERANT COMPUTING (FTCS-10), 1-3 octobre 1980,
pages 231-237, IEEE, KYOTO (JP); BELLMAN et al.:
"AFDT 1 redundancy plan"
COMMUTATION & ELECTRONIQUE, no. 40, janvier
1973, pages 14-40, Paris (FR); J. POSTOLLEC: "Le
réseau de connexion de système E10"
THE POST OFFICE ELECTRICALS ENGINEERS'
JOURNAL, vol. 73, no. 2, juillet 1980, pages 88-91,
Londres (GB); R.A. BOULTER: "System X: Subsystems -
part 2 - The network synchronization subsystem"
INTERNATIONAL SWITCHING SYMPOSIUM, 11 mai
1979, pages 608-614, Paris (FR); F. ANCEAU et al.:
"Projet d'architecture pour la commande d'un
autocommutateur téléphonique"
COMMUNICATION & TRANSMISSION, vol. 3, no. 3,
septembre 1981, pages 99-112, Paris (FR); M. BALLARD
et al.: "Le programme E10.S-TSS.5".

**Desscription**

L'invention concerne un dispositif de distribution de signaux pour autocommutateur temporel, dont l'ensemble de commande est à architecture répartie.

Un tel central comporte un réseau de connexion temporel auquel sont reliés un certain nombre de terminaux et un ensemble de commande à architecture répartie formé de groupes d'unités de commande identiques, par exemple à microprocesseurs, voir par exemple EP-A-0 062 296 publiée le 13.10.1982.

Les services téléphoniques doivent être assurés même en cas de panne d'un organe et pour cela il est habituel d'installer des organes redondants pour les principales fonctions.

Il est également habituel de relier ces organes par des liaisons redondantes et de leur distribuer des signaux de base de temps de telle manière qu'une panne de liaison ou une panne de base de temps ne mette en cause, au pire, qu'un organe redondant.

Il est connu de grouper les organes en modules de défense, aussi indépendants les uns des autres que possible en ce qui concerne les liaisons et distributions.

L'application de cette solution présente des inconvénients dans le cas d'une architecture répartie, surtout si l'on veut banaliser au maximum les organes, en particulier les unités de commande et les liaisons multiplex, dans le but d'avoir un système très souple et modulaire. Cette solution conduit à multiplier les moyens de distribution de base de temps d'une manière prohibitive.

Le but de l'invention est de remédier à ces inconvénients en prévoyant une disposition des distributions de signaux et des liaisons, organisée de manière à optimiser l'utilisation des organes redondants et également à faciliter la mise en œuvre, la maintenance et les extensions.

L'invention a également pour but d'optimiser la durée des échanges entre organes en réduisant la durée des transferts sur les liaisons, c'est-à-dire en réduisant le plus possible la longueur de ces liaisons.

L'invention a pour objet un dispositif de distribution de signaux dans un autocommutateur temporel comportant un réseau de connexion central organisé en plans indépendants, des unités de terminaux reliées à chacun des plans par au moins une liaison multiplex, un ensemble de commande à architecture répartie composé d'unités de commande reliées à chaque plan par au moins une liaison multiplex, et une base de temps desservant des modules de distribution d'horloge aux unités, et comportant au moins deux faisceaux indépendants connectant chaque unité de terminaux par des liaisons multiplex à des plans différents du réseau et par des liaisons de distribution d'horloge et de synchronisation à des modules de distribution distincts qui ont également des alimentations distinctes.

Suivant une autre caractéristique de l'invention, les unités de terminaux et les unités de commande sont séparément associées par groupes qui sont reliés chacun à deux faisceaux indépendants comportant chacun deux liaisons multiplex et une liaison de distribution d'horloge et de synchronisation.

Suivant encore une caractéristique de l'invention, les distributions sont centralisées au niveau du réseau de connexion, les modules étant implantés dans les commutateurs, et les faisceaux étant distribués vers les unités à partir d'un répartiteur connecté aux bornes du réseau de connexion.

D'autres caractéristiques de l'invention seront évoquées dans la description suivante en relation avec les figures mentionnées ci-dessous.

La fig. 1 présente un diagramme général d'un autocommutateur à réseau de connexion temporel.

La fig. 2 présente un diagramme d'une unité de terminaux d'abonnés.

La fig. 3 présente un diagramme général d'un plan du réseau de connexion.

La fig. 4 présente un diagramme de principe du dispositif de distribution selon l'invention.

La fig. 5 présente un schéma de principe d'un module de distribution de base de temps.

La fig. 6 présente un schéma d'un circuit de base de temps utilisé pour un groupe d'unités de terminaux.

La fig. 7 illustre la distribution de signaux de synchronisation et d'horloge dans un commutateur temporel tel que défini à la fig. 1.

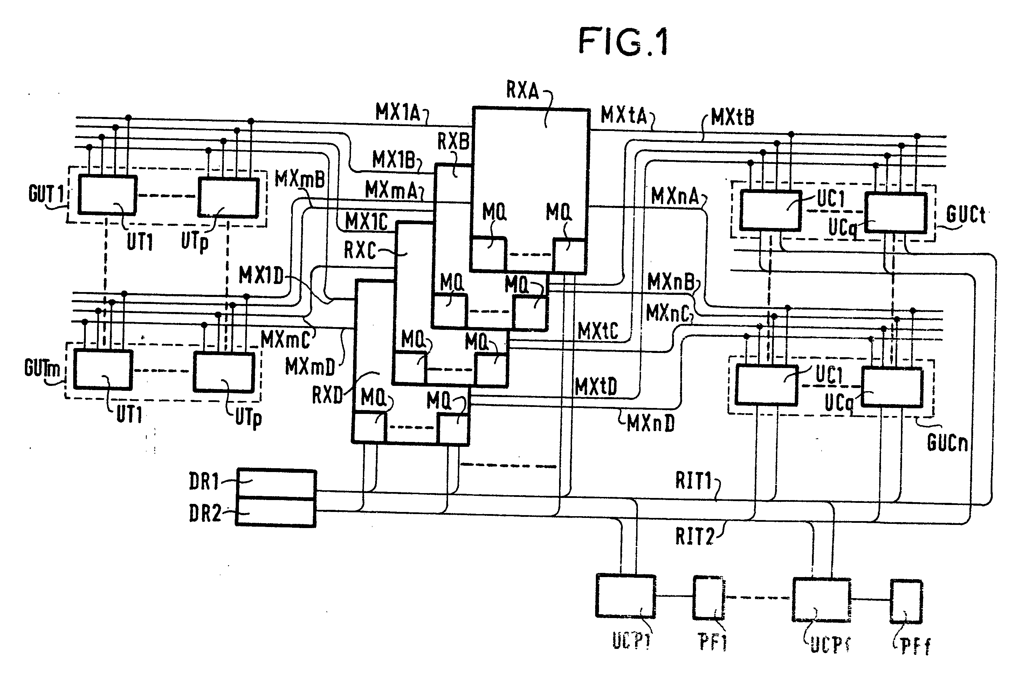

L'autocommutateur à architecture répartie représenté de manière simplifiée à la fig. 1 est constitué de trois ensembles principaux.

— Des groupes d'unités de terminaux divers GuT1 à GuTm comportant par exemple des terminaux UT d'abonnés, de circuits analogiques et numériques, des terminaux auxiliaires de signalisation, d'émission de tonalités et de films parlants, des terminaux d'essais de lignes d'abonnés et de circuits, des terminaux de circuits de conférence, etc.

— Un réseau de connexion central à un seul étage de commutation, organisé en plans indépendants, par exemple quatre plans RXA à RXD.

— Un ensemble de commande à architecture répartie formé de groupes GUC d'unités de commandes UC identiques, à base de microprocesseurs, qui sont banalisées tels les groupes GUCn et GUCt, comprenant chacun des unités telle UC1 et UCQ. L'ensemble de commande comporte également des unités UCP qui gèrent des groupes de périphériques PF, telles UCP1 ou UCPf pour les périphériques PF1 et PFf: ces unités peuvent être identiques aux précédentes, mais elles ne sont pas complètement banalisées du fait de leurs liaisons physiques avec les périphériques qu'elles gèrent.

Les liaisons qui interconnectent les trois ensembles principaux sont les suivantes:

— Les unités de terminaux UT sont reliées à chaque plan du réseau de connexion par une liaison multiplex MX (MX1A à MXmD) à trente deux voies de huits éléments binaires, d'un débit de deux Me.b/s. Les unités de terminaux UT d'un même groupe sont reliées en parallèle aux mêmes liaisons multiplex MX.

— Les unités de commandes UC sont également reliées au réseau de connexion par des liaisons multiplex MXn à MXt telles MXnA ou MXtD à raison d'une liaison par groupe d'unités de commande GUC vers chaque plan. Les messages échangés entre unités de commande et unités de terminaux empruntent des voies temporelles des liaisons multiplex MX, reliées par le réseau de connexion d'une manière semi-permanente et reconfigurable. On réalise ainsi des canaux de transmission de données d'un débit de 64 Ke.b/s qui sont utilisés suivant une procédure dite HDLC définie par les normes C.C.I.T.T.

— Les unités de commande UC et UCP, telles UC1 ou UCPF, sont reliées entre elles par des liaisons point à point identiques RIT1, RIT2 dupliquées pour des raisons de sécurité, ces liaisons de type série utilisent également une procédure HDLC.

Le réseau de connexion central est commandé par des marqueurs MQ pilotés par les unités de commande UC par l'intermédiaire des liaisons RIT1, RIT2.

L'accès aux liaisons RIT1 et RIT2 est géré par une distribution dupliquée DR1, DR2 qui délivre les autorisations d'émission et supervise la durée d'utilisation.

Chaque liaison RIT1 ou RIT2 comporte cinq paires de fils vers chaque unité raccordée pour assurer les fonctions d'appel, d'autorisation, d'horloge, d'émission et de réception.

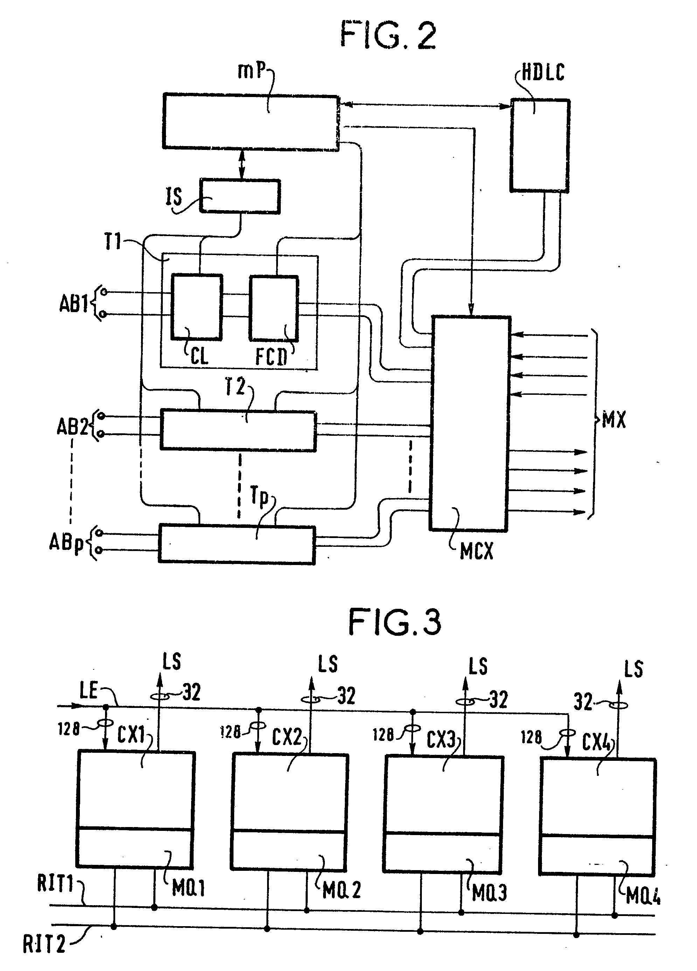

Les unités de terminaux UT, les unités de commande UC et UCP, ainsi que les marqueurs MQ disposent de circuits d'émission/réception de message de type HDLC, par exemple de circuits de type MC 6854 (MOTOROLA) ou 8273 (INTEL), un tel circuit étant indiqué à la figure 2 relative à une unité UT.

Chacune des unités de terminaux UT dispose d'un étage de commutation permettant de connecter un terminal quelconque de l'unité à une voie temporelle de l'une quelconque des liaisons MX qui desservent cette unité.

Chaque terminal T1 à Tp comporte un circuit de ligne CL, relié aux fils AB allant de l'appareil de l'abonné au terminal. Ce circuit CL comprend des moyens d'alimentation, de protection, de supervision de boucle et d'injection de sonnerie ainsi qu'un circuit FCD regroupant l'élément de filtrage et le codec de codage analogique/digital pour un terminal, chaque circuit FCD est également relié à une matrice d'aiguillage spatial MCX.

Chaque unité de terminaux est pilotée par un microprocesseur mP relié aux liaisons multiplex MX par un circuit d'émission/réception HDLC et par la matrice d'aiguillage spatial MCX, en parallèle aux terminaux T1 à Tp.

L'aiguillage temporel est réalisé au niveau des codec par synchronisation sur la voie choisie, sous la commande du microprocesseur MP de l'unité. Celui-ci pilote également les circuits de ligne CL par l'intermédiaire d'une interface IS de supervision et de commande.

Le réseau de connexion central comporte un seul étage de commutation, il est organisé en plans indépendants, ici au nombre de quatre.

Dans l'exemple évoqué ici, chaque plan a une capacité de cent vingt huit liaisons multiplex (fig. 3), c'est-à-dire qu'il peut relier une voie quelconque de l'une des cent vingt huit liaisons entrantes LE à une voie quelconque de l'une des cent vingt huit liaisons sortantes 5LS. Un plan comporte quatre commutateurs CX1 à CX4 équipés chacun d'un marqueur MQ, tel MQ1, et d'un module de distribution MD non représenté. Chaque commutateur dessert cent vingt huit liaisons entrantes LE et trente deux liaisons sortantes LS. Les liaisons entrantes LE sont multiplées

sur les commutateurs du plan. Les marqueurs MQ du commutateur CX sont reliés aux liaisons RIT1, RIT2 de la manière évoquée plus haut.

L'autocommutateur décrit en référence aux figures 1 à 3 fait l'objet de la demande de brevet européen EP-AI-0 062 296.

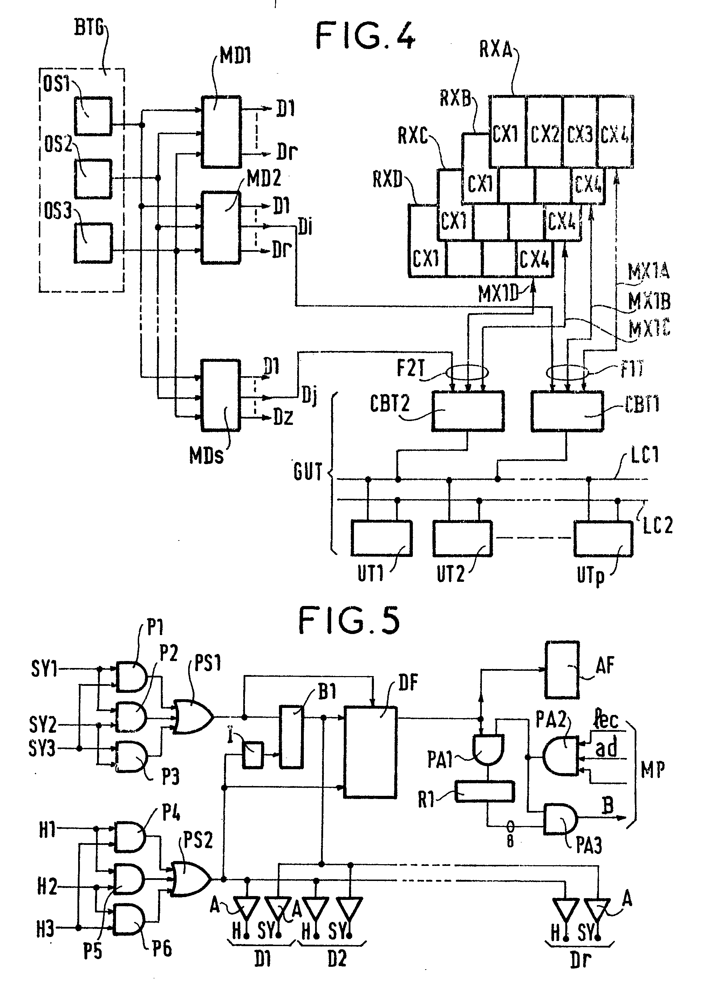

La fig. 4 montre le dispositif de distribution de signaux à un groupe d'unités de terminaux comportant p unités de terminaux UT1 à UTp.

Selon l'invention la distribution de signaux est dupliquée tant au niveau d'un groupe d'unités de terminaux GUT, que d'un groupe d'unités de commande GUC par l'intermédiaire de deux circuits d'horloge et synchronisation CBT1, CBT2 identiques, figurés uniquement ici dans le cas des groupes GUT, ces circuits ont chacun pour rôle:

— de synchroniser les signaux de deux des quatre liaisons multiplex qui relient le groupe au réseau de connexion, tel CBT1 pour MX1A et MX1B, les deux circuits CBT1, CBT2 d'un groupe étant reliés à des plans différents du réseau de connexion et à des modules MD indépendants;

— d'élaborer les signaux de temps nécessaires à toutes les unités du groupe, à partir d'un signal d'horloge et d'un signal de synchronisation de trame provenant d'une base de temps BTG générale pour l'autocommutateur.

Les circuits d'horloges et de synchronisation CBT1, CBT2 distribuent chacun l'ensemble des signaux de temps et multiplex aux unités du groupe, par deux liaisons LC1, LC2 qui leur sont individuellement affectées et qui desservent chacune toutes les unités.

La base de temps générale BTG est formée de trois oscillateurs OS, elle est par exemple du type décrit dans le brevet français n° 2 390 856 de la demanderesse.

Chaque oscillateur OS tel OS1 délivre un signal d'horloge H ainsi qu'un signal de synchronisation de trame SY d'une fréquence égale à la fréquence de trame des liaisons multiplex.

La distribution synchrone des signaux d'horloge H et de synchronisation SY à l'ensemble des organes du central est réalisée par des modules de distribution indépendants MD1 à MDs qui effectuent un choix majoritaire des couples de signaux H, SY reçus des trois oscillateurs, un contrôle de faute, et une distribution vers r destinataires, via r liaisons D par module, telle la liaison Di du module de distribution MD2 vers le destinataire que constitue le circuit de base de temps CBT1. La constitution des liaisons D et LC sera définie ci-dessous.

La fig. 5 montre un exemple de module de distribution MD. Les signaux de synchronisation SY1 à Sy3 et d'horloge H1 à H3 des trois oscillateurs sont reçus respectivement par deux circuits de choix majoritaires formés chacun de trois portes P, de type ET telle P1 et d'une porte PS, de type OU, telle PS1.

La porte PS1 est reliée à une bascule B1 activée par le front descendant du signal H via inverseur I. Les sorties de la bascule B1 et de la porte PS2 fournissent respectivement les signaux de synchronisation SY et les signaux d'horloge H aux fils correspondants des liaisons D1 à Dr, via des amplificateurs A. Un détecteur de faute DF relié à la sortie des portes PS1, PS2 et de la bascule B1, et à l'entrée d'un afficheur AF permet de signaler les fautes de distribution. Naturellement les oscillateurs ont leur propre moyen de détection de fautes. Un registre d'échanges R1 et des portes d'accès PA1 à PA3 permettent la supervision du module de distribution MD par un microprocesseur MP qui est celui du marqueur MX du commutateur auquel ce module de distribution est affecté. Dans la réalisation décrite plus loin, les modules sont situés dans des alvéoles du réseau de connexion.

La lecture du registre R1 sur le bus B du processeur sera validée par exemple par marquage d'adresse «ad» et commande de lecture «lec».

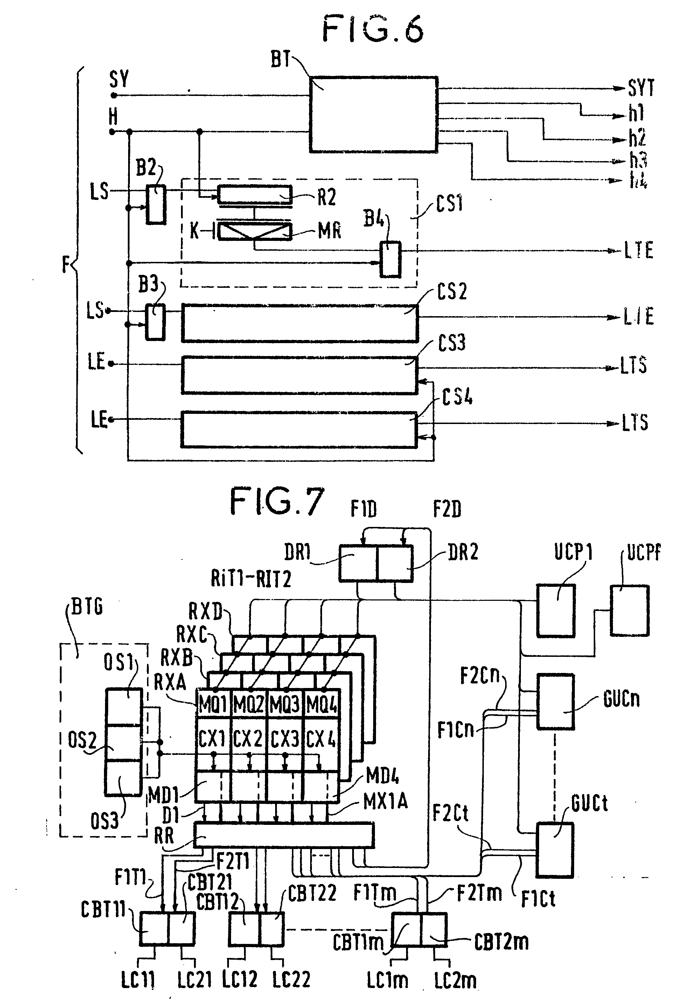

Au niveau du groupe d'unités de terminaux GUT chaque circuit d'horloge et de synchronisation GBT est relié à un module de distribution d'horloge MD et à deux liaisons multiplex MX soit en fait à deux liaisons sortantes LS et deux liaisons entrantes LE (figure 6). Ces circuits CBT comportent un circuit de base de temps interne BT, qui élabore les signaux de synchronisation SYT et les signaux d'horloge h1 à h4 nécessaires aux unités de terminaux UT, ainsi que des circuits de synchronisation CS1 à CS4 des liaisons multiplex (figure 6). Une telle structure fait l'objet de la demande de brevet européen 82 108 458.9, EP-A-0 075 247, ayant la même date prioritaire.

Les circuits de synchronisation CS1 et CS2 sont insérés entre les deux liaisons sortantes LS et les deux liaisons d'entrée de terminaux LTE; les circuits de synchronisation CS3 et CS4 sont insérés entre les deux liaisons de sortie de terminaux LTS et les deux liaisons entrantes LE.

En outre les liaisons sortantes LS sont échantillonnées par des bascules B2 et B3 pilotées par les signaux d'horloge H.

Les circuits de synchronisation CS, tel CS1, sont formés d'un registre tampon R2, d'un multiplexeur MR dont l'adresse K est câblée de manière à introduire un déphasage constant, qui dépend du type d'unités de terminaux du groupe concerné, et d'une bascule de sortie B4.

La figure 7 illustre la distribution des signaux de temps dans un autocommutateur temporel tel que défini ci-dessus.

Etant donné la phase centrale occupée par le réseau de connexion et la redondance qu'il permet grâce à ses plans indépendants, on a localisé les modules de distribution MD dans les équipements du réseau, par exemple à raison d'un module tel qu'une carte de circuits imprimés, par commutateur.

Un répartiteur RR est utilisé pour regrouper les signaux qui proviennent de commutateurs CX, tel CXI, et des modules de distribution MD en vue de leur transmission vers les groupes au niveau du réseau de connexion aux bornes desquels il est connecté. Ceci est obtenu au moyen de deux faisceaux F par groupe d'unités de terminaux GUT, tels les faisceaux F1T1 et F2T1 reliés aux circuits de signaux et de synchronisation CBT11 et CBT21 du groupe GUT1 et les faisceaux F1Cn et F2Cn du groupe d'unités de commande GUCn. Chaque faisceau F comporte deux liaisons sortantes LS, deux liaisons entrantes LE, une liaison d'horloge H et une liaison de synchronisation SY (voir figure 6).

Deux faisceaux supplémentaires F1D, F2D (figure 7) fournissent les signaux d'horloge H et de synchronisation SY aux distributeurs DR1 et DR2 pour leur permettre l'élaboration des signaux d'horloge des liaisons RIT1, RIT2 qui relient les unités de commande d'une part entre elles et d'autre part aux marqueurs.

Les deux faisceaux F1, F2 desservant un même organe sont complètement indépendants, car leurs liaisons multiplex MX sont reliées à des plans différents, en outre les modules de distribution MD correspondants sont desservis par des alimentations distinctes.

Le choix du faisceau F1 ou F2 actif peut être réalisé indépendamment par le microprocesseur prévu pour chaque unité, celui-ci possède en effet son propre oscillateur.

Supposons par exemple qu'un groupe de terminaux GUT soit supervisé par une unité de commande UC qui effectue une exploration cyclique de toutes les unités de terminaux UT, qu'elle supervise. Une panne quelconque du faisceau actif sera détectée par les unités UT qui ne recevront plus de signal d'exploration et qui alors changeront de faisceau actif et de canal de liaison avec l'unité de commande UC.

Cette unité de commande UC aura connaissance du changement en identifiant le canal sur lequel elle recevra la réponse à son exploration.

Ces principes sont appliqués à tous les types d'unités de terminaux: abonné, circuits, auxiliaires de signalisation, de distribution de tonalité et de machines parlantes, unités d'essais de lignes et de joncteurs.

Cette distribution dupliquée réduit considérablement le nombre de modules nécessaires. Par exemple pour un central moyen comportant trente unités de commande UC banalisées, une distribution simple nécessitera trente modules pour qu'une panne ne mette pas plus d'une unité hors service, alors qu'une distribution selon l'invention avec ces mêmes trente unites de commande et si l'on a besoin de cent vingt distributions, ça suffira de douze modules de dix distributions chacun, et de deux alimentations indépendantes.

En reliant six modules de distribution à chaque alimentation en courant, on pourra affecter les trente unités de commande UC aux modules de telle manière qu'une panne sur une alimentation ou une panne de module ne mette hors service aucune unité de commande, et qu'une panne de module et une panne simultanée d'une alimentation ou d'un second module ne mettent au pire qu'une unité de commande hors service.

**Revendications**

1. Dispositif de distribution de signaux (figure 4), pour autocommutateur temporel comportant un réseau de connexion central organisé en plans indépendants (RXA à RXD), des unités de terminaux (UT) reliées à chaque plan du réseau par au moins une liaison multiplex (MX), un ensemble de commande à architecture répartie composé d'unités de commande (UC) également reliées à chaque plan par au moins une liaison multiplex (MX), et une base de temps (BTG) desservant des modules (MD) de distribution d'horloge aux unités, et comportant au moins deux faisceaux indépendants (F1T, F2T) connectant chaque unité de terminaux (UT) par des liaisons multiplex (MX) à des plans (RX) différents du réseau et par des liaisons de distribution d'horloge et de synchronisation (D) à des modules de distribution (MD) distincts qui ont également des alimentations distinctes.

2. Dispositif de distribution suivant la revendication 1, caractérisé par le fait que au moins deux faisceaux indépendants (F1C, F2C) connectent chaque unité de commande (UC) par les liaisons multiplex (MX) à des plans (RX) différents du réseau et par des liaisons de distribution d'horloge et de synchronisation (D) à des modules de distribution (MD) distincts qui ont également des alimentations distinctes.

3. Dispositif de distribution suivant la revendication 1, dans lequel les unités de terminaux (UT) sont organisées en groupes (GUT), caractérisé par le fait que chaque groupe (GUT) est desservi par les deux mêmes faisceaux (F1T, F2T) comportant chacun deux liaisons multiplex (MX) et une liaison (D) de distribution d'horloge et de synchronisation.

4. Dispositif suivant la revendication 2, dans lequel les unités de commande (UC) sont organisées en groupes (GUC), caractérisé par le fait que chaque groupe est desservi par les deux mêmes faisceaux (F1C, F2C), comportant chacun deux liaisons multiplex (MX) et une liaison (D) de distribution d'horloge et de synchronisation.

5. Dispositif suivant la revendication 1, caractérisé par le fait que les faisceaux (F1, F2) desservant les divers groupes (GUC, GUT) d'unités de commande et d'unités de terminaux sont raccordés à un unique répartiteur (RR) qui est connecté aux bornes du réseau de connexion (RX) et à partir duquel les faisceaux sont distribués vers les différentes unités.

6. Dispositif suivant la revendication 5, dans lequel chaque plan (RXA) du réseau de connexion est organisé en commutateurs (CX1 à CX4) pilotés chacun par un marqueur (MX1 à MX4), caractérisé en ce que chaque module de distribution (MD) est affecté à un commutateur (CX) et supervisé par le marqueur (MX) de ce commutateur.

7. Dispositif suivant la revendication 1, caractérisé en ce que, dans chaque groupe d'unités de terminaux ou d'unités de commande (GUT, GUC) chacun des faisceaux (F1, F2) est relié à un circuit d'horloge et de synchronisation (CBT) formé d'une base de temps (BT), fournissant des signaux d'horloge (h1 à h4) et de synchronisation au faisceau et de circuits de synchronisation (CS1 à CS4) desservant les liaisons multiplex entrantes (LE, LTE) et les liaisons multiplex sortantes (LS, LTS) du groupe.

**Patentansprüche**

1. Signalverteilvorrichtung (Fig. 4) für eine Zeitmultiplex-Selbstwählvermittlungsanlage mit einem in unabhängigen Ebenen (RXA bis RXD) organisierten zentralen Koppelfeld, mit Endschaltungseinheiten (UT), die über mindestens eine Multiplexverbindung (MX) mit jeder Ebene des Feldes verbunden ist, mit einer eine verteilte Architektur aufweisenden Steuereinrichtung, die aus ebenfalls mit jeder Ebene über mindestens eine Multiplexverbindung (MX) verbundenen Steuereinheiten (UC) besteht, und mit einer Zeitbasis (BTG), die Module (MD) zur Verteilung des Taktes auf die Einheiten bedient, und mit mindestens zwei unabhängigen Bündeln (F1T, F2T), die jede Endschaltungseinheit (UT) über Multiplexverbindungen (MX) an unterschiedliche Ebenen (RX) des Koppelfeldes und über Taktverteil- und Synchronisationsverbindungen (D) an getrennte Verteilmoduln (MD) anschliessen, die ebenfalls getrennte Stromversorgungen besitzen.

2. Verteilvorrichtung nach Anspruch 1, dadurch gekennzeichnet, dass mindestens zwei unabhängige Bündel (F1C, F2C) jede Steuereinheit (UC) über Multiplexverbindungen (MX) an unterschiedliche Ebenen (RX) des Koppelfeldes und über Taktverteil- und Synchronisationsverbindungen (D) an getrennte Verteilmoduln (MD) anschliessen, die ebenfalls getrennte Stromversorgungen besitzen.

3. Verteilvorrichtung nach Anspruch 1, in der die Endschaltungseinheiten (UT) in Gruppen (GUT) organisiert sind, dadurch gekennzeichnet, dass jede Gruppe (GUT) von den beiden gleichen Bündeln (F1T, F2T) bedient wird, die je zwei Multiplexverbindungen (MX) und eine Taktverteil- und Synchronisationsverbindung (D) aufweisen.

4. Vorrichtung nach Anspruch 2, in der die Steuereinheiten (UC) in Gruppen (GUC) organisiert sind, dadurch gekennzeichnet, dass jede Gruppe von den beiden gleichen Bündeln (F1C, F2C) bedient wird, die je zwei Multiplexverbindungen (MX) und eine Taktverteil- und Synchronisationsverbindung (D) aufweisen.

5. Vorrichtung nach Anspruch 1, dadurch gekennzeichnet, dass die Bündel (F1, F2), die die verschiedenen Gruppen (GUC, GUT) von Steuereinheiten und Endschaltungseinheiten bedienen, an einen gemeinsamen Verteiler (RR) angeschlossen sind, der mit den Anschlüssen des Koppelfeldes (RX) verbunden ist und von dem aus alle Bündel zu den verschiedenen Einheiten verteilt sind.

6. Vorrichtung nach Anspruch 5, in der jede Ebene (RXA) des Koppelfeldes in Form von Schaltern (CX1 bis CX4) organisiert ist, die von einem Markierer (MX1 bis MX4) gesteuert werden, dadurch gekennzeichnet, dass jeder Verteilmodul (MD) einem Schalter (CX) zugeteilt und vom Markierer (MX) dieses Schalters überwacht ist.

7. Vorrichtung nach Anspruch 1, dadurch gekennzeichnet, dass in jeder Gruppe von Endschaltungseinheiten oder Steuereinheiten (GUT, GUC) jedes der Bündel (F1, F2) an einen Takt- und Synchronisationskreis (CBT) angeschlossen ist, der von einem Basistakt (BT), der Taktsignale (h1 bis h4) und Synchronisationssignale an die Bündel liefert, und von Synchronisationsschaltkreisen (CS1 bis CS4) gebildet wird, die die ankommenden Multiplexverbindungen (LE, LTE) und die ausgehenden Multiplexverbindungen (LS, LTS) der Gruppe bedienen.

**Claims**

1. A signal distribution device (fig. 4) for an automatic time division exchange central, comprising a central exchange network which is organized in independant planes (RXA to RXD), terminal units (UT) connected to each plane of the network via at least one multiplex link (MX), a control assembly of distributed structure composed of control units (UC) which are also connected to each plane via at least one multiplex link (MX), and a time base (BTG) associated to distribution moduls (MD) for distributing clock pulses to the units, and comprising at least two independant bundles (F1T, F2T) for connecting each unit of terminals (UT) via multiplex links (MX) to different planes (RX) of the network and via clock distribution and synchronization links (D) to distinct distribution moduls (MD) which are also equipped with distinct current feed devices.

2. A distribution device according to claim 1, characterized in that at least two independant bundles (F1C, F2C) are provided to connect each control unit (UC) via multiplex links (MX) to different planes (RX) of the network and via clock distribution ans synchronization links (D) to distinct distribution moduls (MD) which are also equipped with distinct current feed devices.

3. A distribution device according to claim 1, in which the units of terminals (UT) are organized in groups (GUT), characterized in that each group (GUT) is associated to the same two bundles (F1T, F2T), each of which comprises two multiplex links (MX) and a clock distribution and synchronization link (D).

4. A device according to claim 2, in which the control units (UC) are organized in groups (GUC), characterized in that each group is associated to the same two bundles (F1C, F2C) each of which comprises two multiplex links (MX) and one clock distribution and synchronization link (D).

5. A device according to claim 1, characterized in that the bundles (F1, F2) which are associated to the different groups of control units and of units of terminals are connected to a unique distributor (RR) which is connected to the terminals of the exchange network (RX) and from which all the bundles are distributed to the different units.

6. A device according to claim 5, in which each plane (RXA) of the exchange network is organized in switches (CX1 to CX4) which are each controlled by one marker (MX1 to MX4), characterized in that each distribution modul (MD) is associated to one switch (CX) and supervised by the marker (MX) of said switch.

7. A device according to claim 1, characterized in that in each group of units of terminals or of control units (GUT, GUC), each one of the bundles (F1, F2) is connected to a clock and synchronization circuit (CBT) constituted by a time base (BT) and furnishing clock signals (h1 to h4) and synchronization signals to the bundles, and by synchronization circuits (CS1 to CS4) associated to the incoming multiplex links (LE, LTE) and the outgoing multiplex links (LS, LTS) of the group.

FIG.1

# FIG. 2

mP

HDLC

IS

T1

AB1

CL      FCD

T2

AB2

MX

ABp

Tp

MCX

# FIG. 3

LS          LS          LS          LS

LE          32          32          32          32

128    CX1    128    CX2    128    CX3    128    CX4

RIT1        MQ.1        MQ.2        MQ.3        MQ.4

RIT2

9

# FIG.4

# FIG.5

# FIG.6

# FIG.7